Europäisches Patentamt

European Patent Office

Office européen des brevets

(11) Veröffentlichungsnummer: **0 149 078**
**A2**

(12) # EUROPÄISCHE PATENTANMELDUNG

(21) Anmeldenummer: **84114475.1**

(22) Anmeldetag: **29.11.84**

(51) Int. Cl.⁴: **F 16 K 3/24**
**F 16 N 17/02**

---

(30) Priorität: **04.01.84 CH 22/84**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **LONZA AG**

**Gampel/Wallis(CH)**

(72) Erfinder: **Furrer, Hansjörg**
**Lupsingerstrasse 15**
**CH-Ziefen (Kanton Baselland)(CH)**

(74) Vertreter: **Ebbinghaus, Dieter et al,**
**v. FÜNER, EBBINGHAUS, FINCK Patentanwälte**
**European Patent Attorneys Mariahilfplatz 2 & 3**
**D-8000 München 90(DE)**

(54) Verfahren zur Steuerung von Suspensionsströmen.

(57) Vorrichtung und Verfahren zum Steuern von Suspensionsströmen mittels eines Abschaltventils. Als Suspensionen werden in der Regel Hochtemperaturschmiermittel eingesetzt. Es werden vorzugsweise Kolbenventile angewendet, wobei Schliess- und Oeffnungszeiten von 2 bis 20 Millisekunden eingehalten werden müssen.

EP 0 149 078 A2

Croydon Printing Company Ltd

**Verfahren zur Steuerung von Suspensionsströmen**

Die Erfindung betrifft ein Verfahren zur Steuerung von Suspensionsströmen, insbesondere von Hochtemperaturschmiermitteln in Form von Suspensionen.

Es ist aus den CH-PS 596 294 und 609 728 ein Hochtemperaturschmiermittel bekannt, enthaltend im wesentlichen Graphit, Polymere und Hilfsstoffe, wie Stabilisatoren, suspendiert in Wasser.

Bei der Verarbeitung der Hochtemperaturschmiermittel müssen diese durch Förderleitungen in das Verarbeitungssystem eingespiesen und entsprechend den Bedürfnissen müssen die Flüssigkeitsströme gesteuert werden. Um die Fördermenge zu steuern, wurden innerhalb des Verarbeitungssystems an sich gebräuchliche Abschaltventile eingesetzt. Weder beispielsweise käufliche Kugelventile noch Kükenventile konnten den gestellten Bedürfnissen genügen.

Die eingesetzten Suspensionen bei den gewählten Druckbedingungen und Strömungsgeschwindigkeiten wirken stark abrasiv und damit verschleissend auf die umströmten Teile der Ventile. Aenderungen an den Materialqualitäten dieser Teile brachten keine wesentlichen Fortschritte. Die bekannten Ventile weisen zudem Oeffnungs- und Schliesszeiten im Bereich von Zehntelsekunden auf.

Aufgabe der Erfindung war nun, ein Verfahren und eine Vorrichtung vorzuschlagen, das die beschriebenen Nachteile nicht aufweist. Erfindungsgemäss wurde das mit einer Vorrichtung nach Anspruch 1 und einem Verfahren nach Anspruch 6 erreicht.

Als Abschaltventile im Sinne der Erfindung werden Kolbenventile eingesetzt. Die Erfindung schliesst auch Doppelkolbenventile und Mehrfachkolbenventile sowie Mehrwegventile, beispielsweise auch 3- und 4-Wegventile, mit ein.

Der Antrieb des Ventils richtet sich nach den zur Verfügung stehenden Energiequellen. So ist es möglich, das Ventil mechanisch, elektrisch, elektromagnetisch, hydraulisch oder vorzugsweise pneumatisch anzutreiben.

Gemischte Antriebe, beispielsweise mechanisch mittels Federkraft für einen Arbeitstakt und pneumatisch oder hydraulisch für den anderen Arbeitstakt, sind denkbar.

Kolbenventile sind auch besonders geeignet zur Ausbildung als Doppelkolbenventile, was bedeutet, dass der Kolben direkt mit Druck beaufschlagt und gesteuert wird.

Kolbenventile waren bis anhin nur zur Steuerung von Gasen und gasförmigen Medien unter Druck bekannt. Die Steuerung von Strömen von Flüssigkeiten hat in der Praxis keinen Eingang gefunden und für die Steuerung von Strömen von Suspensionen waren Kolbenventile nie angewendet worden.

Um diesen neuen Anforderungen zu genügen, ist es notwendig, die wesentlichen Kolbenventilteile in qualitativ hochwertigen Materialien, wie rostfreier Stahl, auszuführen. Die Gleitflächen der Kolben können dichtend gegenüber der Gleitflächen der Zylinderbohrung wirken oder der Kolben kann mit metallischen Dichtungen versehen sein.

Das erfindungsgemässe Verfahren wird für die Steuerung von Suspensionsströmen angewendet. Hochtemperaturschmiermittel der eingangs genannten Art stellen solche Suspensionen dar. Um diese Hochtemperaturschmiermittel zeit- und mengengerecht an den Verarbeitungsort zu bringen, beispielsweise innerhalb eines Arbeitstaktes eines Rohrwalzwerkes, wie einer sog. Konti- oder Pilgerstrasse, sind gezielte Oeffnungs- und Schliessvorgänge innerhalb des Zuführungssystems notwendig.

Die Arbeitsdrücke in den Förderleitungen des Zuführungssystems und entsprechend in den Ventilen betragen bis zu 250 bar und in der Regel 80 bis 120 bar.

Die Strömungsgeschwindigkeiten in den Förderleitungen und Ventilen betragen von 20 bis 120 m/sec.

Die angewendeten Hochtemperaturschmiermittel ihrerseits weisen einen hohen Feststoffanteil, in der Regel von 15 bis 50 Gew.% auf. Die Viskosität solcher Suspensionen beträgt bei 5 bis 50°C 1'000 bis 20'000 cP.

Erschwerend kommt dazu, dass die Polymeranteile verharzend wirken und die Förderung und Steuerung der Ströme dadurch weiter erschweren.

Mit den erfindungsgemässen, bis anhin auch nicht angewendeten und nicht erreichbaren kurzen Oeffnungs- und Schliesszeiten kann die Standzeit der Ventile überraschenderweise um ein mehrfaches verlängert werden. Insbesondere die Kolbenventile weisen bei Anwendung des Verfahrens nach der Erfindung einen vernachlässigbaren Verschleiss auf und gewähren volle Betriebssicherheit über lange Zeiträume.

Die eingesetzten Abschaltventile können mit Entspannungsleitungen ausgerüstet sein, die separat oder ebenfalls über den
Kolben gesteuert werden und beim Schliessen der Förderleitung
auf der Abgabeseite eine Entspannungsleitung freigeben. Damit
wird ein Nachfliessen von Restmengen, die sich in den Förderleitungen befinden, verhindert.

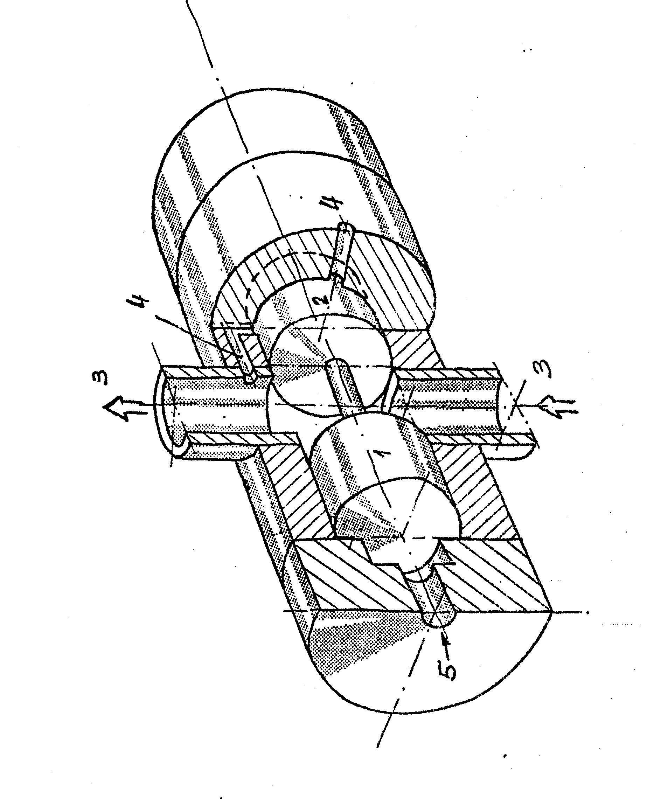

Anhand der Zeichnung wird in beispielhafter Weise eine mögliche Ausführungsart der Vorrichtung näher erläutert.
Das Ventil besteht aus einem Doppelkolben (1/2). Die gezeichnete Kolbenstellung zeigt die offene Förderleitung (3). Die
Entspannunsleitung (4) wird durch den Kolbenteil (2) gesperrt.
Beim umgekehrten Arbeitstakt, beim Schliessen der Förderleitung (3) durch den Kolbenteil (1), öffnet sich die Entspannungsleitung (4). Beispielhaft ist eine Bohrung 5 eingezeichnet, durch die ein hydraulisches oder pneumatisches Steuermedium zum Bewegen des Doppelkolbens eingespiesen werden kann.
Entsprechend findet sich auf der Gegenseite eine weitere Bohrung zur Einspeisung des Mediums für den gegenläufigen Takt.

———————

## Patentansprüche

1. Vorrichtung zur Steuerung von Suspensionsströmen, insbesondere von Hochtemperaturschmiermitteln, enthaltend Graphit und Polymere, suspendiert in Wasser, mit einer Viskosität von 1'000 bis 20'000 cP, bei Drücken bis 250 bar und Strömungsgeschwindigkeiten bis zu 120 m/sec, gekennzeichnet durch ein Abschaltventil mit Schliess- und Oeffnungszeiten von 2 bis 20 Millisekunden.

2. Vorrichtung gemäss Patentanspruch 1, dadurch gekennzeichnet, dass die Steuerung des Abschaltventil mechanisch, elektrisch, elektromagnetisch, hydraulisch und vorzugsweise pneumatisch erfolgt.

3. Vorrichtung gemäss Patentansprüchen 1 und 2, dadurch gekennzeichnet, dass das Abschaltventil ein Kolbenventil ist.

4. Vorrichtung gemäss Anspruch 3, dadurch gekennzeichnet, dass die Gleitflächen der Kolben dichtend gegenüber der Gleitfläche der Zylinderbohrung wirken.

5. Vorrichtung gemäss Anspruch 3, dadurch gekennzeichnet, dass der Kolben mit metallischen Dichtungen versehen ist.

6. Verfahren zur Steuerung von Suspensionsströmen, insbesondere von Hochtemperaturschmiermitteln in Form von Graphit und Polymeren, suspendiert in Wasser, mit einer Viskosität von 1'000 bis 20'000 cP, bei Drücken bis zu 250 bar und Strömungsgeschwindigkeiten bis zu 120 m/sec, dadurch gekennzeichnet, dass man die Steuerung durch ein Abschaltventil vornimmt, wobei Schliess- und Oeffnungszeiten von 2 bis 20 Millisekunden eingehalten werden.

7. Verfahren gemäss Patentanspruch 6, dadurch gekennzeichnet, dass die Steuerung des Abschaltventils, insbesondere des Kolbenventils, mechanisch, elektrisch, elektromagnetisch, hydraulisch und vorzugsweise pneumatisch erfolgt.

8. Verfahren gemäss Patentansprüchen 6 und 7, dadurch gekennzeichnet, dass die Steuerung mit einem Kolbenventil ausgeführt wird.

Zeichnung 1 — 1/1 — 0149078